# EUROPEAN PATENT APPLICATION

(11) **EP 4 258 052 A1**
(43) Date of publication of application: **11.10.2023**
(21) Application number: 22167480.7
(22) Date of filing: 08.04.2022
(51) Int. Cl.: G02F 1/35

(54) **SUPERCONTINUUM SYSTEM WITH SPECTRAL DETECTION**

(71) Applicant: NKT Photonics A/S, 3460 Birkerød (DK)
(72) Inventor: GIESSMANN JESPERSEN, Kim, 3460 Birkerød (DK); DENNINGER, Mark, 3460 Birkerød (DK); FEUCHTER, Thomas, 3460 Birkerød (DK)
(74) Representative: Zacco Denmark A/S

(57) **Abstract**

Disclosed is a supercontinuum system for providing supercontinuum light to an external device and/or an external sample, comprising: a supercontinuum-module configured to generate the supercontinuum light; a spectrometer configured to measure a spectrum of the supercontinuum light or a part thereof; a delivery-fiber for delivering the supercontinuum light, or a part thereof, though the delivery-fiber from an initial input-end to a final output-end.

## Description

### Field of the invention

The present disclosure relates generally to a supercontinuum system. More specifically, the present disclosure relates to a supercontinuum system with spectral detection. Most specifically, the present disclosure relates to a supercontinuum system with a control module based on spectral detection.

### Background

Super continuum systems with spectral detection and/or with control-module(s) based on or without spectral detection, are known in the field.

Various examples of supercontinuum systems with spectral monitoring and control-systems based on or without spectral detection are disclosed in WO 2021/043593.

In one example of WO 2021/043593, there is disclosed a supercontinuum system where measured spectral parameters values are compared with a reference spectrum such that a control signal can be generated and a pump coupling optimization can be performed.

In another of example of WO 2021/043593, there is disclosed a supercontinuum system with a control module to control a tilt actuation system. The supercontinuum system and the control module therefor are not based on spectral detection. In the example, there is however disclosed a connector in between a first and second delivery-fiber to direct a small portion of the supercontinuum radiation to an intensity detector. In this manner, the amount of radiation that is coupled into the second delivery fiber can be monitored using the intensity detector, i.e. an inline-detector. The radiation is used to control the tilt actuation system, particularly to control the radiation beam into an input connector of the first delivery fiber.

Other supercontinuum systems based on spectral detection, using an inline-spectrometer, for example used for calibration of a setpoint of acoustic optical tunable filters (AOTFs), are disclosed in WO 2021/008929. The use of the inline-spectrometer can be used prior to the AOTFs or after the AOTFs using a calibrated controller for the AOTFs.

A supercontinuum system with spectral detection, and for monitoring a spectral response of a gas in a fiber, but not for detection-based control, is disclosed in the PhD thesis "Bi-tapered fiber sensor using a supercontinuum light source for a broad spectral range", by D.F.G. Mina, 2017.

In the prior art as described above, which relate to spectral detection, the supercontinuum systems either relate to controlling a filter, controlling a fiber coupling, or monitoring the spectral composition of a gas inside a fiber.

In other words, the prior art, as described above, discloses supercontinuum systems where the purpose is either to control a specific module in a specific manner inside a supercontinuum system, or to measure a gas inside a supercontinuum system.

Accordingly, the prior art examples, as described above, do not disclose supercontinuum systems that provide a spectral detection, such that the spectral detection can be used to provide information about the spectrum of the supercontinuum light, which is delivered outside the supercontinuum system, such as for an external device and/or for an external sample.

In other words, the prior art examples, as described above, provide examples, where the user and/a controller does not get information about the light that is delivered outside the supercontinuum system.

Accordingly, there is a desire to provide a supercontinuum system with spectral detection that provides information about the generated supercontinuum light, such as its spectrum thereof, that is delivered outside the supercontinuum system, such as for an external device and/or for an external sample.

In this context, WO 2021/008929, as already described above, discloses a solution for providing information about the generated supercontinuum light, such as its spectrum thereof, that is delivered outside the supercontinuum system, such as for an external device, in this example a metrology system.

The solution in WO 2021/008929 is provided by measuring the spectrum of the supercontinuum light, as generated outside the supercontinuum system, particularly by use of a spectrometer at wafer-level of the metrology system.

This solution is however far from optimal in that it requires the user to set up a spectrometer at the wafer-level, or generally set up a spectrometer at the measuring site and/or at sample level. Furthermore, measuring at sample level may be difficult and be influenced by the sample itself.

Thus, there is a desire to improve a supercontinuum system with spectral detection that provides information about the generated supercontinuum light, such as its spectrum thereof, that is delivered outside the supercontinuum system, such as for an external device and/or for an external sample.

### Summary

It is an objective of this disclosure to provide a supercontinuum system for providing supercontinuum light to an external device and/or an external sample, in particular a supercontinuum system that improves the spectral detection of generated supercontinuum light outside the supercontinuum system.

Further, it is an objective of this disclosure to provide a supercontinuum system that provides spectral detection of generated supercontinuum light outside the supercontinuum system in an easy manner.

These and other objectives have been solved by the supercontinuum system as defined in the claims and as described below in the present disclosure.

In one aspect of the disclosure, there is disclosed a supercontinuum system for providing supercontinuum light, or a part thereof, to an external device and/or an external sample, comprising:
- a supercontinuum-module configured to generate the supercontinuum light;
- a spectrometer configured to measure a spectrum of the supercontinuum light, or the part thereof;
- a delivery-fiber for delivering the supercontinuum light, or the part thereof, though the delivery-fiber from an initial input-end to a final output-end.

In one embodiment, the supercontinuum system further comprises an input-coupler optically connected to the initial input-end and optically connected to the supercontinuum-module.

In a preferred embodiment, the supercontinuum system further comprises an output-coupler optically connected to the final output-end of the delivery fiber, wherein the output-coupler is configured to split the supercontinuum-light, or the part thereof, into two separate signals:
∘ an output-signal for the external device and/or for the external sample, and
∘ an input-signal for the spectrometer, such that the input-signal is for mirroring the output-signal, and thereby for monitoring the spectrum of the supercontinuum light, or the part thereof, as coupled out by the output-coupler.

One advantage of having the output-coupler connected to the final output-end, i.e. where the external device and/or the external sample receives the output from the supercontinuum system via that delivery-fiber, is that the input-signal mirrors and/or reflects the signal that has been delivered through the delivery fiber. In this manner, by detecting and/or analyzing the input-signal signal, using the spectrometer, it is possible to check for example whether the delivery-fiber has been properly connected to the supercontinuum-module and/or whether the delivery-fiber has been degraded in delivery performance. Such an advantage is for example not possible in supercontinuum systems, where an inline-spectrometer or in-line detector is connected to an intermediate output-end between two fibers, and thus not to the final output-end. In the prior art as described in the background, such as WO 2021/008929, an output-coupler is located at an intermediate output-end before the final output-end, such that the input-signal for the detector or spectrometer is for mirroring the input-signal, and thereby for monitoring the signal of the supercontinuum light as coupled into the delivery-fiber by the input-coupler - not as coupled out from the delivery-fiber - as disclosed by the present disclosure.

Another advantage of having the output-coupler connected to the final output-end, is that the input-signal is not based on a signal from the external device and/or the external sample. This improves therefore the manner, in which spectral detection of generated supercontinuum light outside the supercontinuum system is provided.

### Brief description of the drawings

The above and/or additional objects, features and advantages of the present disclosure, will be further described by the following illustrative and non-limiting detailed description of embodiments of the present disclosure, with reference to the appended drawing(s), wherein:
**Fig. 1** shows an example of the supercontinuum system according to the present disclosure.
**Fig. 2** shows an example of a bandwidth of the supercontinuum system according to the present disclosure.
**Fig. 3** shows an example of a fiber coil for the supercontinuum system according to the present disclosure.
**Fig. 4** shows an example of speckle noise in the supercontinuum system according to the present disclosure.

### Detailed description

### Output-coupler and input-signal

In one embodiment, the output-coupler is an output-collimator.

In another embodiment, the input for the spectrometer is provided by reflection from the output-coupler. To provide reflection form the output-coupler, the output-coupler may comprise one or more lenses, wherein said lenses may form an output collimator, and/or be configured to reflect the supercontinuum light, or the part thereof. One of the one or more lenses may comprise a coating that is configured to reflect the supercontinuum light, or the part thereof. For example, the coating may be configured to reflect wavelengths in the range from 400 nm to 1000 nm.

In yet another embodiment, the output-coupler, connected at the final output-end, couples the supercontinuum light, or the part thereof, out to free-space propagation and into the external device and/or the external sample. For example, the output-coupler, such as an output-collimator, may be placed in an optical setup such that it is directed towards the external sample. In this regard, the output-coupler may be configured for illuminating the external sample. The output-coupler as described in this embodiment may also be connected to the external device.

According to the present disclosure, the external device may form an external system.

For example, the output-coupler may be connected to a microscope illumination system, which may be formed by at least an optical device, or a plurality of optical devices, such as mirror(s) and/or lens(es).

In a preferred embodiment, the input-signal for the spectrometer is provided via a multimode-fiber, wherein the multimode-fiber has a length that is longer than 10 m, more preferably longer than 40 m, such as 60 m, most preferably longer than 90 m, such as 100 m, or longer than 150 m, whereby interference of modes within the resolution of individual pixels is suppressed, and a reduced speckle-signal is received in the spectrometer. The inventors of the present disclosure have found, by noise analysis of a multimode-fiber guiding light in the 800-1000 nm range, that when the multimode-fiber is less than 10 m, the average speckle noise is around 6%. By increasing the length to more than 10 m, the average speckle noise is reduced to around 3%. When the length is increased up to a length of more than 40 m, the average speckle noise is reduced to around 1.5%. When the length is increased to a length of more than 90 m, such as 100 m, the average speckle noise is reduced to around 1%. Accordingly, increasing the length of the multimode-fiber as described above, particularly when the multimode-fiber is connected to the output-coupler connected at the final output-end, reduces the average speckle noise in the very specific manner. Having around 3% or less average speckle noise produces an optimum spectral detection, and for this reason, the length of 10 m or more has been found to be an optimum. Furthermore, the inventors of the present disclosure have found, by noise analysis of a multimode-fiber guiding light in the 800-1000 nm range, that when the multimode-fiber is less than 10 m, the peak-to-peak speckle noise is more than 6%, such as more than 10%. By increasing the length to more than 10 m, the peak-to-peak speckle noise is reduced to around 6%. When the length is increased up to a length of more than 40 m, the peak-to-peak speckle noise is reduced to around 3%. When the length is increased to a length of more than 90 m, such as 100 m, the peak-to-peak speckle noise is reduced to around 2%. Accordingly, increasing the length of the multimode-fiber as described above, particularly when the multimode-fiber is connected to the output-coupler connected at the final output-end, reduces the peak-to-peak speckle noise in the very specific manner. Having around 3% or less peak-to-peak speckle noise produces an optimum spectral detection, and for this reason, the length of 10 m or more has been found to be an optimum.

It is a well-known fact that in a multimode fiber, the spectral correlation width of speckle scales inversely with the length of the multi-mode fiber. Accordingly, the inventors have confirmed that their experimental findings are in agreement with the theoretical understanding of multimode-fibers.

However, finding the specific length(s) of a multimode-fiber as described above, which provided the optimal spectral detection of a supercontinuum-module generating supercontinuum light, was not obvious, as will be shown in the following.

To suppress the modes in a multimode-fiber, one may calculate when the transit time for the different modes is larger than the coherence time for the detected light. Further, to provide an optimal resolution of a spectrometer, one may assume a resolution of the spectrometer. For example, if 1 nm resolution is desired for the spectrometer, the corresponding coherence time is roughly 0.8 ps at 500 nm and 3.3 ps at 1000 nm.

A 100 µm step index fiber has approx. 2000 modes at 500 nm and 500 modes at 1000 nm for a numerical aperture (NA) of 0.1 (chosen arbitrarily here between the excitation NA and the acceptance NA of the spectrometer).

The index step of this multimode fiber will be on the order of 0.003, so assuming that the effective index of the modes is distributed equally over this index difference, the effective index difference between the individual modes will be 1.5e-6 at 500nm and 6e-6 at 1000nm.

The difference in transit time will be dt=L*dn/c, L=dt*c/dn, which means that the fiber length at 500 nm should be larger than L=0.8ps*3e8/1.5e-6 = 160m, and at 1000nm L=3.3e-12*3e8/6e-6 = 165m, to ensure that the modes are out of phase within the resolution bandwidth of the spectrometer.

Accordingly, based on various assumptions, one may calculate that a multimode-fiber with a length of around 160 m may produce a reasonable result with suppressed modes, but it was not obvious what the actual speckle noise at such a length would be, and if a shorter length of a multimode-fiber could be used. The inventors of the present disclosure have experimentally found an optimum multimode-fiber length, as described above, which gave a surprising technical effect of producing the very low speckle noise.

In the field of fiber optics, it is well-known that speckles vary with temperature. When a multimode fiber is excited from a spatially coherent light source (such as from a supercontinuum module), many of the guided modes will be excited. Due to the small difference in the propagation speed through the fibers, the phase of the light will be conserved through the fibers, and the modes can thus interfere at the output end of the fiber causing the well-known speckle pattern.

The speckle pattern on the output of the multimode fiber is caused by interference of different modes in the fiber. As the modes propagate at different speed, and as the power and phase of the light in these modes is highly dependent on the excitation and perturbations of the fiber, the interference pattern will be dependent on these parameters as well. Furthermore, the actual speed in the fiber depends on temperature, so the speckle pattern will also vary with temperature.

When detected by a spectrometer with a spectral resolution of typically a few nm, this has been found to result in pronounced, pixel-dependent amplitude variations. The present disclosure provides a specific solution to mitigate these variations.

Furthermore, when the spectrum is measured by a spectrometer, the measured spectrum is extremely sensitive towards any kind of mechanical or thermal perturbations due to the modal interference. Accordingly, the inventors have also found solutions to provide a fiber-coil that is robust to mechanical and thermal perturbations. The solutions are described in the below embodiments.

In one embodiment, the multimode-fiber is coiled on a fiber-coil with a coil-diameter of less than 100 mm, preferably a coil-diameter of less than 90 mm, such as around 80 mm, and wherein the fiber-coil is mounted in a tray having a tray-diameter that matches the coil-diameter with the fiber coiled around it, whereby the multimode-fiber is mechanically fixed. The tray diameter may for example be matched to the coil-diameter by a few millimeters, such that the tray-diameter is 5 to 10 mm more than the coil-diameter.

In another embodiment, the fiber, as coiled around the fiber-coil and mounted in the tray, may be fixed in the tray by having foam in the tray. Accordingly, in some embodiments, the tray comprises foam to hold the fiber in place. The inventors of the present disclosure have observed that foam, such as a soft foam, improves the signal in the fiber by around 3%. The foam may improve the signal in the fiber by making the fiber more resistant to shocks, vibrations, and temperature changes. A soft foam is preferred since it may apply only a low pressure to the fiber. A soft foam by not induce stress in the fiber, and thus may not interfere with signal. At the same time, a soft foam may also hold the fiber in place.

In yet another embodiment, the fiber, as coiled around the fiber-coil and mounted in the tray, may be fixed in the tray by having silicone in the tray. Accordingly, in some embodiments, the tray comprises silicone to hold the fiber in place. The inventors of the present disclosure have observed that silicone improves the signal in the fiber by around 5%. The silicone may improve the signal in the fiber by making the fiber more resistant to shocks, vibrations, and temperature changes.

In an alternative embodiment, the fiber may be wound and form a fiber-coil in itself.

### Supercontinuum light, filter-module and control-module

In one embodiment, the supercontinuum light has a broad spectrum being defined in a wavelength-range that spans at least from 400 nm to 1000 nm, preferably from 400 nm to 2000 nm, more preferably from 400 nm to 2400 nm. According to the present disclosure, the super continuum system comprises a delivery-fiber for delivering the supercontinuum light, or a part thereof, through the delivery-fiber from an initial input-end to a final output-end. This means that the delivery-fiber, in the here described embodiment, is configured to deliver light with wavelengths ranging from at least 400 nm to 1000 nm, preferably from 400 nm to 2000 nm, more preferably from 400 nm to 2400 nm. The range(s) as here specified is/are thus not a limitation as such on the supercontinuum light source, but more a requirement to the delivery-fiber. Accordingly, in one embodiment, the delivery-fiber is configured to deliver supercontinuum light having a broad spectrum being defined in a wavelength-range that spans at least from 400 nm to 1000 nm, preferably from 400 nm to 2000 nm, more preferably from 400 nm to 2400 nm, or a part thereof, through the delivery-fiber from the initial input-end to the final output-end.

In another embodiment, the supercontinuum system further comprises a filter-module configured to provide the part of the supercontinuum light in the form of a bandwidth-filtered signal having a wavelength with a narrow from around 5 nm to 10 nm, preferably less than 7 nm, such as from 5 nm to around 7 nm. This means that if the supercontinuum system generates light having a broad spectrum as defined above, for example from 400 nm to 1000 nm, then the filter-module is configured to bandwidth-filter this light and produce a wavelength or a wavelength range in the defined range of the broad spectrum. Accordingly, by using the filter-module, it is possible to tune the supercontinuum system, as here defined, and output a desired wavelength within the broad spectrum as generated by the supercontinuum-module. Further, with the filter-module as here described, and according to the present disclosure, the delivery-fiber is in one embodiment configured to deliver supercontinuum light having a broad spectrum being defined in a wavelength-range that spans at least from 400 nm to 1000 nm, preferably from 400 nm to 2000 nm, more preferably from 400 nm to 2400 nm, in particular a part thereof, where the part thereof is the bandwidth-filtered signal.

The bandwidth-filtered signal may, according to the herein defined embodiment, have a wavelength with a narrow bandwidth from around 5 nm to 10 nm, preferably less than 7 nm, such as from 5 nm to around 7 nm.

According to the present disclosure, the bandwidth-filtered signal, within the broad spectrum as defined above, is delivered through the delivery-fiber from the initial input-end to the final output-end.

Further, according to the present disclosure, the bandwidth-filtered signal is centered around a wavelength.

The bandwidth-filtered signal may be defined by a narrow bandwidth of less than 7 nm, where it has a minimum transmission of more than 20%. The transmission may by different definition be more than 50%, and such as more than 70%. A preferred definition is however such that the bandwidth-filtered signal is defined by a narrow bandwidth of less than 7 nm, where it has a minimum transmission of more than 80%.

Accordingly, the bandwidth-filtered signal, as centered around a wavelength, is preferably defined to have a transmission of more than 80%. Since the filter-module operates on the generated supercontinuum light having a broad spectrum, the bandwidth-filtered signal, as centered around a wavelength within the broad spectrum, is preferably defined to have a transmission of more than 80% for all the wavelengths in the broad spectrum, such as defined to be at least from 400 nm to 1000 nm.

The transmission as described above may be defined as the transmission through the filter-module, and/or as the transmission through the delivery-fiber.

In a preferred embodiment, the filter-module comprises two continuously variable filters that are moved and/or tuned relative to each other, the two variable filters comprising a first variable filter in the form of a long-wave pass-filter, and a second filter in the form of a short-wave pass-filter, whereby the bandwidth is controllable. A filter-module as here described may be advantageous over other filter-modules because the two variable filters may be configured to cover a very broad range of wavelengths, such as the broad spectrum ranging from at least 400 nm to 1000 nm, from 400 nm to 2000 nm, and even from 400 nm to 2400 nm.

Other filter-modules to be used, may be acousto-optical tunable filters (AOTFs), and/or volume Bragg gratings. However, such filter-modules cannot be used to control the bandwidth, so it is preferred to use two continuously variable filters that are moved and/or tuned relative to each other.

By being able to control the bandwidth, the user of the supercontinuum-system is provided full flexibility of the tunability and can use the supercontinuum-system for a wide range of applications and external samples and/or external devices.

For example, in a setup where the external device is an external spectrometer that receives the supercontinuum light from an external sample, which is illuminated by the supercontinuum system as herein disclosed, a control of the bandwidth is desirable.

In a most preferred embodiment, the supercontinuum system further comprises a control-module connected to one or more motorized stage(s) configured to hold the two variable filters, such that the two variable filters are controlled by the control-module. In this manner, the spectrum and/or the bandwidth of the supercontinuum light may be controlled by the control-module.

In another preferred embodiment, the input-signal is used to self-calibrate the first filter-module. Self-calibration may for example be performed by sequentially defining one or more parameter(s) of the first filter module, or a part thereof, and measure and analyze the spectrum of the transmitted light. An example of a parameter may be a position of for example one or more of the two variable filters as described above. When defining the position of the one or more of the two variable filters, the wavelength obtained at the position is matched to the position. Accordingly, during self-calibration, a look-up table between the position and wavelength may be updated. Generally speaking, the relationship between the one or more parameter(s) and the spectrum of the transmitted light, or a part thereof, such as an effective filter wavelength, may be verified and calibrated. In the embodiment, where the filter-module comprises one or more motorized stages, for example to hold the variable filters, the input-signal may be used to self-calibrate the one or more motorized stage(s).

### Delivery-fiber and display

In one embodiment, the delivery-fiber is an endlessly single mode photonic crystal fiber (PCF) that is configured to deliver the supercontinuum light, or the part thereof, through the delivery-fiber.

The term "endlessly single mode" is well understood in the field of fiber optics. It simply means single mode for all wavelengths. Accordingly, in relation to the present disclosure, it may in one embodiment mean that the delivery fiber is single mode for supercontinuum light having a broad spectrum being defined in a wavelength-range that spans at least from 400 nm to 1000 nm, preferably from 400 nm to 2000 nm, more preferably from 400 nm to 2400 nm. In practice, this may be difficult to achieve. Thus, in some embodiments, the endlessly single mode is a delivery-fiber that is single mode for at least about 50 %, such as at least about 80 % of the transmission bandwidth, such as for the entire transmission bandwidth of the delivery fiber.

The term "endlessly single mode" is further explained in the article "Endlessly single-mode photonic crystal fiber," by T. A. Birks, J. C. Knight, and P. St. J. Russell, Opt. Lett. 22, 961-963 (1997)". The endlessly single mode fiber(s) as described in the article is/are hereby incorporated by reference.

An example of another endlessly single mode fiber is disclosed in WO 2016/206700, also incorporated herein by reference.

In another and/or related embodiment, the delivery-fiber is a large mode area (LMA) fiber that is configured to deliver the supercontinuum light, or the part thereof, through the delivery-fiber. One type of a large mode area fiber may be an endlessly single mode fiber. Another type of a large mode area fiber may be rod. A large mode area fiber with a large cladding may provide a stiff fiber, and thus in some embodiments forming a rod. It may be advantageous to use a rod since it may avoid bend-induced losses.

Using a delivery-fiber as disclosed above, and in relation to the present disclosure, provides that the supercontinuum light, or the part thereof, is able to be delivered to the external sample and/or the external device with great transmission efficiency for all wavelengths within the spectrum of the supercontinuum light, regardless of it being the full spectrum, i.e. the full bandwidth of the supercontinuum light, or a bandwidth-filtered part thereof. Furthermore, when the delivery-fiber is an endlessly single-mode fiber, the light, such as in the range from 400-1000 nm, may to be delivered in a flexible manner and with low, or at least a very limited loss, preferably without loss, from the supercontinuum module to the final output-end of the delivery fiber, thus to the external device and/or external sample.

There may be other delivery-fibers that can be used to deliver supercontinuum light to an external sample and/or external device, such as for example the delivery-fiber in the form of a hollow core (HC)-PCF as disclosed in WO 2021/043593. However, the therein disclosed HC-PCF being a photonic bandgap delivery-fiber may only guide a limited wavelength region and not all of the guided wavelengths may be single mode.

In a preferred embodiment, the supercontinuum system further comprises a display configured to display the spectrum such that a user of the supercontinuum system is informed about the spectrum, whereby the user of the supercontinuum system is informed about the spectrum of the supercontinuum light, or the part thereof, as being delivered to the external device and/or to the external sample at the final output-end and via the output-coupler. The advantage of this embodiment is clearly to be informed about the spectrum just before it is delivered to the external sample and/or the external device. This may for example provide the user of information related to whether the delivery-fiber is properly connected to the supercontinuum-module, and/or whether the delivery-fiber is degraded.

### Example 1 - supercontinuum system

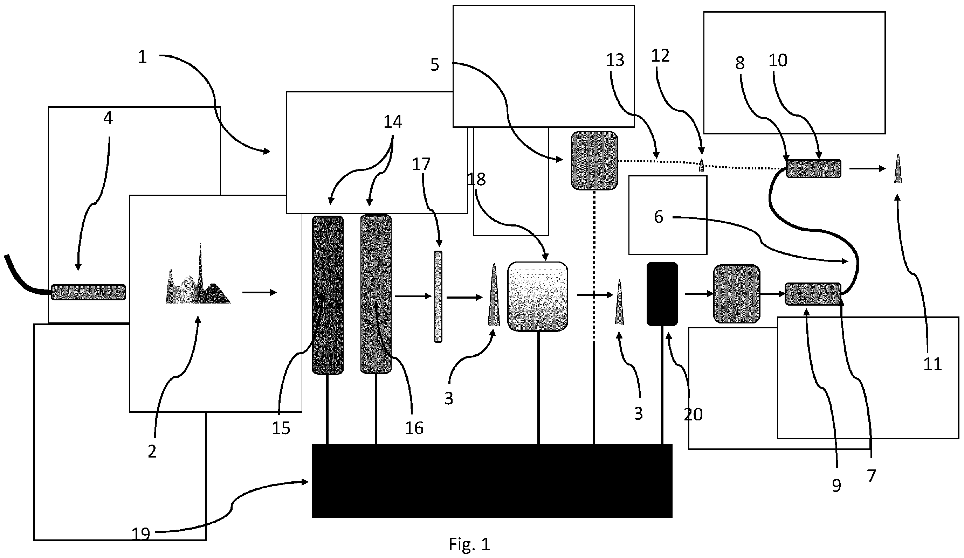

**Fig. 1** shows an example of the supercontinuum system **1** according to the present disclosure. The supercontinuum system **1**, according to the present disclosure, is for providing supercontinuum light **2,** or a part thereof **3**, to an external device and/or an external sample (not shown). The supercontinuum system **1** comprises a supercontinuum-module **4** configured to generate the supercontinuum light **2.** The supercontinuum system **1** further comprises a spectrometer **5** configured to measure a spectrum of the supercontinuum light **2** or the part thereof **3.** To provide supercontinuum light **2**, or the part thereof **3,** to the external device and/or and external sample, the supercontinuum system **1** further comprises a delivery-fiber **6** for delivering the supercontinuum light **2,** or a part thereof **3,** though the delivery-fiber **6** from an initial input-end **7** to a final output-end **8.** **Fig. 1** shows further that the supercontinuum system **1** further comprises an input-coupler **9** optically connected to the initial input-end **7** and optically connected to the supercontinuum-module **4.** **Fig. 1** shows further that the supercontinuum system **1** further comprises an output-coupler **10** optically connected to the final output-end **8** of the delivery fiber **6**, wherein the output-coupler **10** is configured to split the supercontinuum-light **2**, or the part thereof **3**, into two separate signals: an output-signal **11** for the external device and/or for the external sample, and an input-signal **12** for the spectrometer **5**, such that the input-signal **12** is for mirroring the output-signal **11**, and thereby for monitoring the spectrum of the supercontinuum light **2**, or the part thereof **3**, as coupled out by the output-coupler **10.**

In the present example, the output-coupler **10** is an output-collimator, which is configured to output a collimated beam. As can be seen from **Fig. 1**, the output-coupler **10**, connected at the final output-end **8**, couples the supercontinuum light **2,** or the part thereof **3**, out to free-space propagation and into the external device and/or the external sample (not shown).

Also, the input-signal **12** for the spectrometer **5** is provided by reflection from the output-coupler **10.** The input-signal **12** for the spectrometer **5** is provided via a multimode-fiber **13.** The multimode-fiber **13** has a length that is longer than 10 m, more preferably longer than 40 m, such as 60 m, most preferably longer than 90 m, such as 100 m, or longer than 150 m, whereby interference of modes is suppressed, and a reduced speckle-signal is received in the spectrometer **5.** The multimode-fiber is placed at the output coupler, and to avoid having two fibers to and from the output-coupler, as shown in **Fig. 1**, the multimode-fiber may be attached to the delivery-fiber.

The supercontinuum system, as shown here, further comprises a filter-module **14** configured to provide the part of the supercontinuum light **3** in the form of a bandwidth-filtered signal having a wavelength with a narrow bandwidth of less than 7 nm. The filter-module **14** comprises two continuously variable filters (**15, 16**) that are moved relative to each other, the two variable filters (**15, 16**) comprising a first variable filter **15** in the form of a long-wave pass-filter, and a second filter **16** in the form of a short-wave pass-filter, whereby the bandwidth is controllable.

As shown in this example, in addition to the filter-module **14**, the supercontinuum system comprises one or more blocking filters **17**, and an attenuation filter **18**, for example in the form of a neutral density filter.

The supercontinuum system, as shown in this example, further comprises a control-module **19** connected to one or more motorized stage(s) (not shown) configured to hold the two variable filters (**15, 16**), such that the two variable filters (**15**, **16**) are controlled by the control-module **19.** The control-module **19** receives input from the spectrometer **5.** In this manner, the output from the supercontinuum system is fed back to the control-module **19** via the output-coupler **10**, the multimode-fiber **13**, and the spectrometer **5.** The spectrometer may in one embodiment comprise a calibrated photodiode which measures the output-power from the supercontinuum system. This may ensure that the output-power is able to be correctly displayed, particularly such that for example an output of 1mW per line is guaranteed.

The control- module **19** as shown here, is also used to control the attenuation filter **18**, and a beam shutter **20.** The shutter **20** may be configured to shut off the supercontinuum light when the wavelength is tuned. This may ensure that no light is present between wavelengths tuning steps.

### Example 2 - bandwidth (BW) of the supercontinuum system

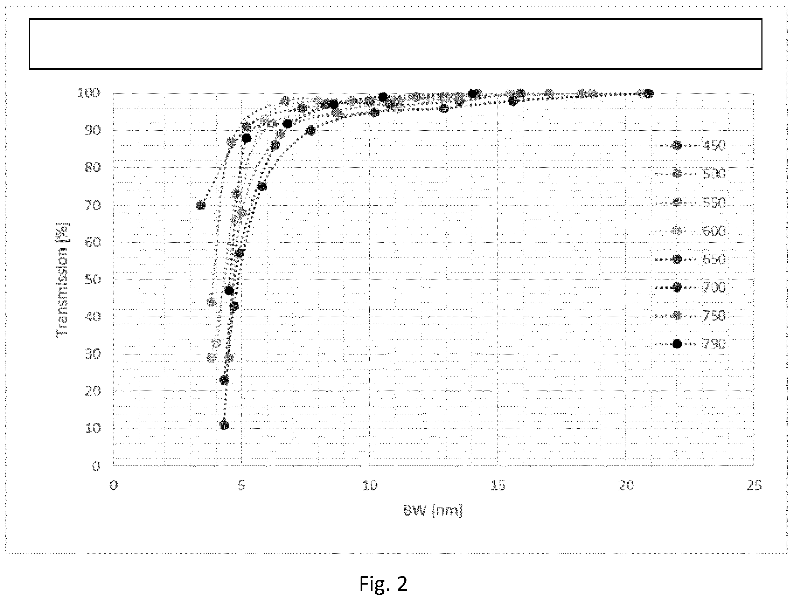

**Fig. 2** shows an example of the bandwidth (BW) of the supercontinuum system **1** according to the present disclosure.

As described in the previous example, the supercontinuum system **1** may in an embodiment further comprise a filter-module **14** configured to provide the part of the supercontinuum light **3** in the form of a bandwidth-filtered signal.

As also described, the bandwidth-filtered signal has a wavelength with a narrow bandwidth of less than 7 nm. This example will explain how this bandwidth may be interpreted.

**Fig. 2** shows first of all that the supercontinuum system **1** generates light having a broad spectrum. The broad spectrum, in this example, ranges from 400 nm to 1000 nm, and the filter-module **14** is configured to bandwidth-filter this light and produce a wavelength in the defined range. In the present example, the filter-module **14** is configured to tune the supercontinuum system and output a desired wavelength within the broad spectrum as generated by the supercontinuum-module **1.** As shown in **Fig. 2**, several wavelengths within the broad spectrum are produced, here the following wavelengths are shown: 450 nm, 500 nm, 550 nm, 600 nm, 650 nm, 700 nm, 750 nm, and 790 nm.

According to the present disclosure, the delivery-fiber is thus configured to deliver the supercontinuum light **2** with a broad spectrum being defined in the wavelength-range that spans at least from 400 nm to 1000 nm. Using the tunable filter, i.e. the filter module **14**, as here described, the bandwidth-filtered signal is a signal that produce at least the wavelengths 450 nm, 500 nm, 550 nm, 600 nm, 650 nm, 700 nm, 750 nm, and 790 nm. Accordingly, the delivery-fiber **6** is thus configured to deliver the bandwidth-filtered signal within the broad spectrum being defined in the wavelength-range that spans at least from 400 nm to 1000 nm.

**Fig. 2** shows that the bandwidth-filtered signal has a wavelength with a narrow bandwidth of less than 7 nm, and that the bandwidth-filtered signal is centered around a wavelength, here at least the wavelengths 450 nm, 500 nm, 550 nm, 600 nm, 650 nm, 700 nm, 750 nm, and 790 nm.

**Fig. 2** further shows that the narrow bandwidth of less than 7 nm has a minimum transmission of more than 20%, more than 50%, and such as more than 70%. In fact, as is shown in **Fig. 2**, the bandwidth-filtered signal, centered around a wavelength, has a minimum transmission of more than 80%. Thus, for all wavelengths as generated by the supercontinuum system 1, and filtered using the filter-module **14**, it can be seen from **Fig. 2**, that when the bandwidth (BW) is around 7 nm, and even less than 7 nm, then the transmission is more than 80%.

Accordingly, the bandwidth-filtered signal **3**, as centered around a wavelength, is preferably defined to have a transmission of more than 80%.

This example shows that since the filter-module **14** operates on the generated supercontinuum light **2** having a broad spectrum, the bandwidth-filtered signal **3**, as centered around a wavelength within the broad spectrum, is preferably defined to have a transmission of more than 80% for all the wavelengths in the broad spectrum - here defined to be at least from 400 nm to 1000 nm.

### Example 3 - multimode-fiber coiled to a fiber-coil

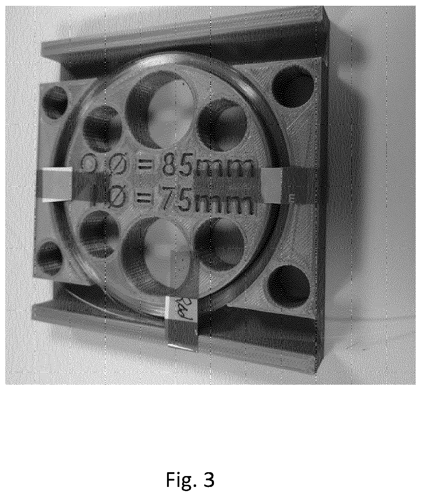

**Fig. 3** shows an example of a multi-mode fiber coiled on a fiber coil for the supercontinuum system according to the present disclosure.

**Fig. 3** shows a fiber-coil, whereon a multimode-fiber is coiled. The multimode-fiber has a length that is longer than 10 m, here 100 m, whereby interference of modes is suppressed, and a reduced speckle-signal is received in the spectrometer.

The multimode-fiber is coiled to a fiber-coil with a coil-diameter of less than 100 mm, preferably a diameter of less than 90 mm, here 75 mm, and wherein the fiber coil is mounted in a tray having a tray-diameter that matches the coil-diameter with the fiber coiled around it, whereby the multimode-fiber is mechanically fixed. The tray-diameter is in this example 85 mm.

The fiber-coil as shown in **Fig. 3** protects the fiber-coil from mechanical perturbations by having the fiber-coil in the tray. The tray is 3D-printed. By 3D-printing the tray, the inventors have found that the fiber-coil could be placed in a protected way without any significant stress. Although the shown tray is 3D-printed, the tray may be manufactured in various materials, and by other techniques with similar performance.

To hold the fiber mechanically in the tray, pieces of soft foam as well as tape (covered with plastic to avoid the fibers sticking to it) is placed on top of the fiber-coil and the tray. This configuration was tested and showed very good performance.

A small perturbation of the fiber coil causing a small change in transmission of approx. 2%, was observed with the soft foam.

By changing the coil-diameter from 75 mm to 80 mm, thereby reducing the wrench of the tray to 5mm, i.e. the distance between the coil-diameter and the tray-diameter, the inventors found that this provided the fiber being more stable when subjected to mechanical vibrations and impact.

The sensitivity towards mechanical perturbations was tested by shaking the fiber tray with the fiber mounted and this showed very little or no response to the perturbations.

### Example 4 (A-B) - speckle noise in a supercontinuum system

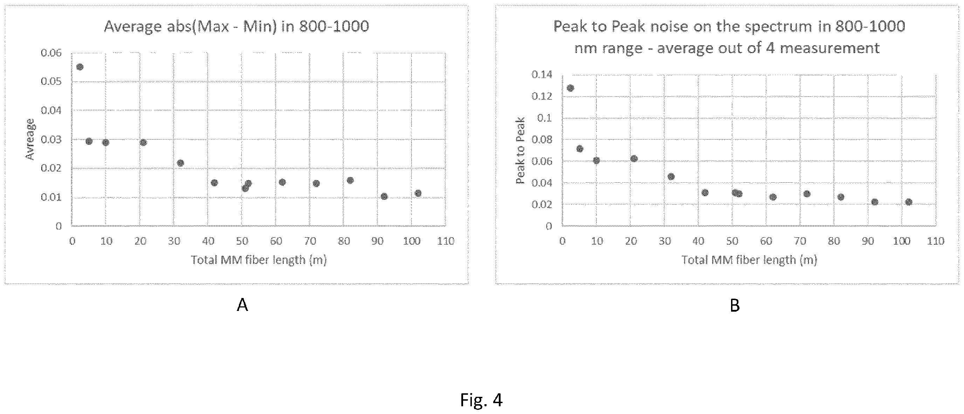

**Fig. 4** **(A-B)** show examples of speckle noise in the supercontinuum system according to the present disclosure.

In these examples, the input-signal for the spectrometer is provided via a multimode-fiber, wherein the multimode-fiber has a length that is longer than 10 m, more preferably longer than 40 m, such as 60 m, most preferably longer than 90 m, such as 100 m, or longer than 150 m, whereby interference of modes is suppressed, and a reduced speckle-signal is received in the spectrometer.

These examples present the technical effect of reducing speckle noise to various low values, by using different multimode fiber lengths.

The result of **Fig. 4A** first of all shows that when the multimode-fiber is less than 10 m, the average speckle noise is around 6%. By increasing the length to more than 10 m, the average speckle noise is reduced to around 3%. When the length is increased up to a length of more than 40 m, the average speckle noise is reduced to around 1.5%. When the length is increased to a length of more than 90 m, such as 100 m, the average speckle noise is reduced to around 1%. Accordingly, increasing the length of the multimode-fiber as described above, particularly when the multimode-fiber is connected to the output-coupler connected at the final output-end, reduces the average speckle noise in the very specific manner.

Having around 3% or less average speckle noise produces an optimum spectral detection, and for this reason, the length of 10 m or more, such as 40 m or more, has been found to be an optimum.

Furthermore, the inventors of the present disclosure have found, as shown in **Fig. 4B****,** that for a multimode-fiber guiding light in the 800-1000 nm range, and when the multimode-fiber is less than 10 m, the peak-to-peak speckle noise is more than 6%, such as more than 10%. By increasing the length to more than 10 m, the peak-to-peak speckle noise is reduced to around 6%. When the length is increased up to a length of more than 40 m, the peak-to-peak speckle noise is reduced to around 3%. When the length is increased to a length of more than 90 m, such as 100 m, the peak-to-peak speckle noise is reduced to around 2%.

Accordingly, increasing the length of the multimode-fiber as described above, particularly when the multimode-fiber is connected to the output-coupler connected at the final output-end, reduces the peak-to-peak speckle noise in the very specific manner. Having around 3% or less peak-to-peak speckle noise produces an optimum spectral detection, and for this reason, the length of 10 m or more, such as 40 m or more, has been found to be an optimum.

## Claims

1. A supercontinuum system for providing supercontinuum light, or a part thereof, to an external device and/or an external sample, comprising:
- a supercontinuum-module configured to generate the supercontinuum light;
- a spectrometer configured to measure a spectrum of the supercontinuum light or the part thereof;
- a delivery-fiber for delivering the supercontinuum light, or the part thereof, through the delivery-fiber from an initial input-end to a final output-end;
- an input-coupler optically connected to the initial input-end and optically connected to the supercontinuum-module;
- an output-coupler optically connected to the final output-end of the delivery fiber, wherein the output-coupler is configured to split the supercontinuum-light, or the part thereof, into two separate signals:
∘ an output-signal for the external device and/or for the external sample, and
∘ an input-signal for the spectrometer, such that the input-signal is for mirroring the output-signal, and thereby for monitoring the spectrum of the supercontinuum light, or the part thereof, as coupled out by the output-coupler.

2. The supercontinuum system according to any of the preceding claims, wherein the output-coupler is an output-collimator.

3. The supercontinuum system according to any of the preceding claims, wherein the input for the spectrometer is provided by reflection from the output-coupler.

4. The supercontinuum system according to any of the preceding claims, wherein the output-coupler, connected at the final output-end, couples the supercontinuum light, or the part thereof, out to free-space propagation and into the external device and/or the external sample.

5. The supercontinuum system according to any of the preceding claims, wherein the input-signal for the spectrometer is provided via a multimode-fiber, wherein the multimode-fiber has a length that is longer than 10 m, more preferably longer than 40 m, such as 60 m, most preferably longer than 90 m, such as 100 m, or longer than 150 m, whereby interference of modes is suppressed and a reduced speckle-signal is received in the spectrometer.

6. The supercontinuum system according to claim 5, wherein the multimode-fiber is coiled on a fiber-coil with a coil-diameter of less than 100 mm, preferably a diameter of less than 90 mm, such as around 80 mm, and wherein the fiber coil is mounted in a tray having a tray-diameter that matches the coil-diameter with the fiber coiled around it, whereby the multimode-fiber is mechanically fixed.

7. The supercontinuum system according to any of the preceding claims, wherein the supercontinuum light has a broad spectrum being defined in a wavelength-range that spans at least from 400 nm to 1000 nm, preferably from 400 nm to 2000 nm, more preferably from 400 nm to 2400 nm.

8. The supercontinuum system according to claim 7, wherein the supercontinuum system further comprises a filter-module configured to provide the part of the supercontinuum light in the form of a bandwidth-filtered signal having a wavelength with a narrow bandwidth from around 5 nm to 10 nm, preferably less than 7 nm, such as from 5 nm to around 7 nm.

9. The supercontinuum system according to claim 8, wherein the filter-module comprises two continuously variable filters that are moved and/or tuned relative to each other, the two variable filters comprising a first variable filter in the form of a long-wave pass-filter, and a second filter in the form of a short-wave pass-filter, whereby the bandwidth is controllable.

10. The supercontinuum system according to claim 9, wherein the supercontinuum system further comprises a control-module connected to one or more motorized stage(s) configured to hold the two variable filters, such that the two variable filters are controlled by the control-module.

11. The supercontinuum system according to claim 8, wherein the input-signal is used to self-calibrate the first filter-module.

12. The supercontinuum system according to claim 10, wherein the input-signal is used to self-calibrate the one or more motorized stage(s).

13. The supercontinuum system according to any of the preceding claims, wherein the delivery-fiber is an endlessly single mode photonic crystal fiber that is configured to deliver the supercontinuum light, or the part thereof, through the delivery-fiber.

14. The supercontinuum system according to any of the preceding claims, wherein the delivery-fiber is a large mode area fiber that is configured to the deliver the supercontinuum light, or the part thereof, through the delivery-fiber.

15. The supercontinuum system according to any of the preceding claims, wherein the supercontinuum system further comprises a display configured to display the spectrum such that a user of the supercontinuum system is informed about the spectrum, whereby the user of the supercontinuum system is informed about the spectrum of the supercontinuum light, or the part thereof, as being delivered to the external device and/or to the external sample at the final output-end and via the output-coupler.
